# EUROPEAN PATENT SPECIFICATION

(11) **EP 2 479 523 B1**
(45) Date of publication and mention of the grant of the patent: **11.04.2018**
(21) Application number: 09849378.6
(22) Date of filing: 30.10.2009
(51) Int. Cl.: F26B 5/04, C04B 33/30, C04B 33/00, B22C 9/12

(54) **METHOD AND DEVICE FOR RAPIDLY DRYING MOLD SHELL**
VERFAHREN UND VORRICHTUNG ZUR SCHNELLEN TROCKNUNG VON GUSSFORMEN
PROCÉDÉ ET DISPOSITIF DE SÉCHAGE RAPIDE DE COQUILLE

(30) Priority: 15.09.2009 CN 200910172987
(43) Date of publication of application: 25.07.2012
(73) Proprietor: Tsai, Yuchi, Dongguan, Guangdong 523729 (CN)
(72) Inventor: Tsai, Yuchi, Dongguan, Guangdong 523729 (CN)
(74) Representative: Intès, Didier Gérard André
(86) International application number: PCT/CN2009/074709
(87) International publication number: WO 2011/032325

(56) References cited:
- EP-A1- 0 887 606
- EP-A1- 1 314 521
- WO-A1-91/12945
- DE-A1- 3 738 992
- DE-A1- 3 738 992
- DE-A1- 4 439 694
- DE-A1- 10 038 704
- DE-A1- 19 609 695
- DE-A1- 19 609 695
- DE-A1-102006 026 796
- US-A- 3 196 506
- US-B1- 6 640 462

## Description

### FIELD OF THE INVENTION

This invention relates to the precision casting technology, in particular, to a method and device for rapid drying mold shell.

### BACKGROUND OF THE INVENTION

Precision casting is a casting method which differs from to the traditional casting technology, resulting in relatively accurate shapes and higher casting precisions. Precision casting process is as follows: first, making a wax pattern consistent with the product to be cast in size and shape; then, making a mold shell on the surface of the wax pattern, and dewaxing the mold shell (melting and removing the wax pattern inside); and finally, casting metal material into the dewaxed mold shell, and breaking and removing the mold shell after the metal material is cooled down and solidified, so as to obtain the required product.

In this process, making a mold shell is of great importance, which determines the quality of castings. At present, shell molding process is usually used for making mold shells, to be more specific, water-soluble silica sol shell molding process. This method is to prepare different slurries and sands with refractory materials, then apply one layer of slurry on the surface of the wax pattern, followed by one layer of sand and repeat this process to make a mold shell with the required thickness. Therefore, the mold shell may be structurally divided into surface layer, transition layer (the 2nd layer), supporting layer (back layer) and sealing layer, of which, there is only one surface layer, one transition layer and one sealing layer, and several supporting layers.

As the silica sol is reinforced by the dehydration and concentration process of the gel, in the process of making mold shells with water-soluble silica sol, an important processing step is to dry all layers of the mold shell.

The traditional drying method is to place a mold shell under constant temperature and humidity to let it dry naturally. The mold shell made in this way is of good quality, but it takes a long time. For a common mold shell of 6-8 layers, it takes about 8∼24 hours to dry each layer, and about one week to complete the whole work. Long process determines low production efficiency.

For the rapid drying of the mold shell, two new drying methods are developed and used:
Method I: dehumidifying the mold shell by forced blower to make it rapidly dried at a wind speed of 2∼12m/s, and controlling the surface temperature of the mold shell under room temperature. This method improves the drying efficiency, only taking 6 hours to completely dry a 6-layer mold shell, but when the castings have a complex structure with holes, differences arise between windward and leeward sides during air blowing, and the wind speed inside the holes is far smaller than that on surface, which may result in excessive and insufficient dryings, and uneven drying would influence the quality of the mold shell.
Method II: covering the mold shell with porous powerful hygroscopic materials to rapidly absorb the moisture in the mold shell by means of the capillary phenomenon. This method can also improve the drying speed of mold shell, but it is required to completely remove the hygroscopic materials on the surface of mold shell before moving to the next step--immersion into slurry. Furthermore, when the castings have a complex structure with holes, it is not easy to embed the hygroscopic materials into the holes, so it is impossible to successfully complete the work.

It can be concluded that the current mold shell drying methods can't ensure high quality of a mold shell and rapid drying simultaneously when the mold shell has a complex structure.

DE102006026796 (A1) discloses a method according to the preamble of claim 1 for producing of inorganically bound molds and cores used in foundries for lightweight metal casting comprising heating and drying in a vacuum chamber.

DE19609695 (A1) refers to a combined microwave and vacuum drying method.

A further method and appliance for radiation vacuum condensation drying is disclosed in DE3738992 (A1).

US3196506 (A) refers to a method of making a shell mold by lost wax process.

### SUMMARY OF THE INVENTION

The present invention refers to a rapid drying method according to claim 1 and to a rapidly drying device according to claim 2.

This invention provides a rapid drying method and device for mold shell, which is able to ensure the quality of a mold shell and realize the rapid drying of the mold shell simultaneously when the mold shell has a complex structure.

To achieve the above-mentioned purposes, the present disclosure adopts the following technical proposal:
A rapid drying method for mold shell according to claim 1 is provided.

Further a rapid drying device for mold shell according to claim 2 is provided. Optimally, the cooling and condensing device comprises a compressor, a condenser, an evaporator, a low-pressure regulating valve and an expansion valve. The compressor, the condenser, the low-pressure regulating valve and the expansion valve are all arranged outside the sealed chamber, while the evaporator is arranged inside the sealed chamber, wherein,
the outlet of the compressor is connected with the inlet of the condenser;
the outlet of the condenser is connected with the inlet of the evaporator via the expansion valve; and
the outlet of the evaporator is connected with the inlet of the compressor via the low-pressure regulating valve.

Optimally, a gas-liquid separator is arranged between the compressor and the low-pressure regulating valve.

Optimally, an oil separator is arranged between the compressor and the condenser, wherein, an oil outlet of the oil separator is connected to the compressor.

Optimally, a drying filter is arranged between the condenser and the expansion valve.

Optimally, a water cooler is arranged between the condenser and the drying filter.

Optimally, a high-pressure heat recovery tube of compressor is also arranged in the sealed chamber, wherein,
the outlet of the drying filter is also connected with one end of the high-pressure heat recovery tube of compressor; and
the other end of the high-pressure heat recovery tube of compressor is connected with the inlet of the expansion valve.

Optimally, the heating device is arranged in the sealed chamber, which is an electric heating tube.

Optimally, the sealed chamber is also arranged with a vertical spacer plate and a fan to form an air circulation loop in the sealed chamber, wherein,
one side of the vertical spacer plate is used for accommodating the mold shell, and the fan is arranged above the side of the vertical spacer; and
the other side of the vertical spacer plate is for accommodating the evaporator.

Optimally, a vacuum water tank is arranged on the bottom of the chamber body, and drain outlets are arranged on the bottom of the vacuum water tank.

Optimally, a sealing ring groove is arranged around the sealing door and an inflatable sealing ring is arranged in the sealing ring groove.

Optimally, a first filter screen and a second filter screen are arranged in proper order between the vacuum device and the chamber body.

Optimally, the air inlet of the chamber body is arranged with an external pressure equalizing solenoid valve and/or an external pressure equalizing manual ball valve.

In the present disclosure, the sealed chamber is dehumidified through condensation process in vacuum to make it dried gradually. As there are differences in humidity and pressure between inside and outside the mold shell due to the large humidity within, the moisture in the mold shell will defuse continuously. In vacuum, the diffusion speed of moisture is accelerated, thus greatly improving the drying speed of the mold shell, and no difference in drying speed will occur in vacuum due to the consistent humidity, atmosphere pressure and moisture diffusion. In addition, the present disclosure cools part of gas in the sealed chamber to condense the moisture in the sealed chamber, which reduces the humidity of the sealed chamber, and makes the moisture in the mold shell defuse outwards continuously to gradually dry the mold shell. In the present disclosure, it is possible to keep the volume of the mold shell unchanged in constant temperature, while releasing the sealed chamber into normal pressure state is able to avoid excessive drying of some part of the mold shell. The present disclosure is able to ensure the quality of a mold shell and realize the rapid drying of the mold shell simultaneously even if the mold shell has a complex structure.

The supporting layer of the mold shell made with the present disclosure has a loose spongy structure, which greatly improves the air permeability of the mold shell, and significantly reduces the breaking coefficient of a sintered mold shell to over 5,516 MPa (800 psi, pounds per square inch), thus preparing the slurry in the best conditions for making mold shells without any disintegrants.

### BRIEF DESCRIPTION OF THE ATTACHED DRAWINGS

Figure 1 is a flow diagram of the embodiment of the rapid drying method for mold shell in accordance with the present invention;
Figure 2 is a structural diagram of the embodiment of the rapid drying device for mold shell in accordance with the present invention;
Figure 3 is a structural diagram of the cooling and condensing device embodied in Figure 2;
Figure 4 is a diagram of the improved internal structure of the device as shown in Figure 2;
Figure 5 is a front structure diagram of the device as shown in Figure 4 when the sealing door is opened; and
Figure 6 is a structural diagram of the vacuum device and the vacuum water tank outside the sealed chamber in the embodiment of the device as shown in Figure 4.

### DETAILED DESCRIPTION OF OPERATION

In order to solve the problem that the current mold shell drying methods cannot ensure the quality of a mold shell and realize the rapid drying of the mold shell simultaneously when the mold shell has a complex structure, this invention provides a rapid drying method and device for mold shell, which will be described herein below in detail with figures.

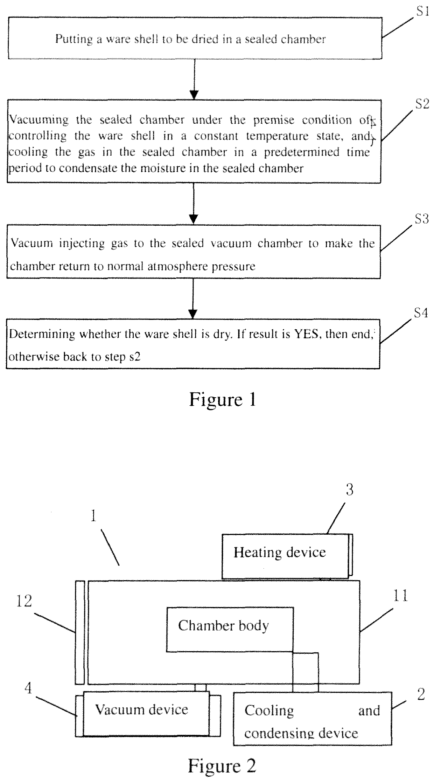

The present invention provides a rapid drying method for mold shell, as shown in Figure 1, comprising:
S1: putting a mold shell to be dried in a sealed chamber which is preferably made of metal materials;
S2: vacuuming the sealed chamber under the premise condition of controlling the mold shell in a constant temperature state, and cooling the gas in the sealed chamber in a predetermined time period to condensate the moisture in the sealed chamber;
   In this step, the quality of mold shell could be ensured by controlling the mold shell in thermostatic condition. Without controlling the temperature, volatilization of moisture will absorb heat inside the mold shell, cooling the wax pattern, and further making it contract according to the rationale of "expansion caused by heat and contraction caused by cold", so the slurry for making the mold shell will shrink in volume accordingly. When the mold shell is completely dried, without moisture to volatilize, the wax pattern will absorb external heat and heat up to the room temperature, with its volume expanded to the original. However, since the mold shell has become dry and hard, it will inevitably burst due to the expansion of the wax pattern, or the character grooves on it might be broken due to the pulling force, thus lowering the quality of the mold shell.
   In this step, vacuuming the sealed chamber and cooling part of gas in the sealed chamber may be carried out simultaneously. As there are some differences in humidity and pressure between inside and outside the mold shell due to large humidity of the mold shell, the moisture of the mold shell will defuse continuously. In vacuum, the diffusion of moisture will be speeded up, thus greatly improving the drying speed of the mold shell, Moreover, there is no difference in drying speed in vacuum due to the consistent humidity, atmosphere pressure and moisture diffusion. In addition, the present invention cools part of gas in the sealed chamber to condense the moisture inside, which reduces the humidity and makes the moisture in the mold shell defuse outwards continuously to gradually dry the mold shell.
S3: vacuum injecting gas to the sealed vacuum chamber to make the chamber return to normal atmosphere pressure;
   Dehumidifying results of the mold shell under the vacuum and constant-pressure state are not as good as that under dynamic vacuuming, and there are grooves of different depths on the mold shell in most cases. In order to have even drying of the grooved bottom and the surface and improve the drying efficiency, it needs to vacuum inject gas to the sealed chamber to make it return to the normal atmosphere pressure. Repeat this process several time and the moisture content on the grooved bottom and surface of the mold shell will gradually become even, thus avoiding the influence on the quality of the mold shell due to partly excessive drying.
S4: determining whether the mold shell is dry. If result is YES, then end, otherwise back to step S2.

In this step, if the mold shell is dried completely, end the process; and if otherwise, repeat step S2 and S3. Generally speaking, the mold shell can be dried completely only after repeating step S2 and S3 several times. There are many methods to determine whether the mold shell is dried, and there two examples will be given for illustration. The first method is to check the surface temperature of the mold shell in vacuum. When the humidity is lower than some value, it will indicate that the temperature of the wet ball is equal to that of the dry ball, meaning there is no water to volatilize in the mold shell, in other words, the mold shell has been dried completely. The second method is to set a resistance value based on experiences of drying mold shells, and the mold shell will be deemed dry if it reaches this value, and so end the process; if not, continue the process.

After the process from S1 to S4 is completed, even if the structure of the mold shell is complex, the present invention can ensure the quality of a mold shell, and realize the rapid drying of the mold shell simultaneously.

It is found through tests that, under vacuum state, the slurry for making the mold shell will bloat and become spongy, and the higher the vacuum degree, the more serious the bloating. After many researches, the inventor found the reason for this phenomenon: under vacuum state, the bubble in the slurry will expand, driving the slurry and sand particles to move slightly. After a while, the expansion of the slurry ends and it stars to shrink. As the shrinking force is far smaller that the force generated by expansion, and gelled slurry and sand particles no longer have mobility to return to the previous position due to the dehydration of the slurry, the mold shell will have tiny holes and networked cracks, resulting in slightly loose tissue, increasing its thickness and air permeability.

The aforesaid phenomenon increases the air permeability and collapsibility of the mold shell, but reduces the strength. Therefore, when processing various layers of the mold shell, it is necessary to control different vacuum degrees according to different demands for the air permeability and strength of different layers.

As for the surface layer, in order to ensure the quality of the mold shell, it is required to get a dense surface layer, and avoid spongy bloating, thus, the processing of the surface layer should be carried out in low vacuum, and the vacuum degree of the sealed chamber could vary between 86659,3∼73327,1 Pa (650∼550 mmHg), and preferably, 79993.2 Pa (600 mmHg).

As the transition layer is to connect the surface layer and the supporting layer, it needs to have certain strength and air permeability. Therefore, the vacuum degree required for this layer is slightly larger than that for the surface layer, which may be 70660,66∼57328,46 Pa (530∼430 mmHg), and preferably, 66661 Pa (500 mmHg).

As for the supporting layer of the mold shell, it needs both enough strength to bear the static pressure of the metal liquid that has not yet solidified, and good air permeability to ensure the quality of castings. Therefore, the vacuum degree required for this layer is preferably 57328,46∼43996,26 Pa (430∼330 mmHg). If it is kept for a period of time under said vacuum, its slurry will show a loose spongy structure, which greatly improves the air permeability and significantly reduces the breaking coefficient of the sintered mold shell to over 800 psi, thus preparing the slurry in the best conditions for making mold shells without any disintegrants.

Finally, as for the sealing layer of the mold shell, the vacuum degree required may be 57328,46∼43996,26 Pa (430∼330 mmHg) to ensure proper strength and air permeability of the layer.

Drying the mold shell with the invented method as described is able to greatly reduce the time required for drying, with detailed data as shown in Table 1 below.

**Table 1:**

| Layer of mold shell to be dried | Time required by the natural drying method in previous arts | Time required by the method adopted in the present invention |
|---|---|---|
| Surface layer | 8∼24 hours | 8∼18 min |
| Transition layer | 6∼24 hours | 20∼40 min |
| Supporting layer | 8∼24 hours/layer | 40∼60 min/layer |
| Sealing layer | 16∼32 hours | 40∼60 min |

As shown in Table 1, for a mold shell of 6∼8 layers, it needs about one week for natural drying in the previous arts, but only 6 hours with the method as described in the present invention, which greatly improves production efficiency, reduces costs and saves energy.

In the rapid drying method for mold shell in accordance with the present invention, the drying of the mold shell is continuously accelerated through repeatedly vacuuming and gas injecting, and a cooling, condensing and dehumidifying device is arranged inside the sealed chamber to avoid heavy moisture inside which slows the drying. In addition, a heating device is also arranged to ensure the quality of mold shell. Furthermore, the present invention uses different vacuum degrees for different layers of the mold shell to create the best conditions for drying the mold shell. Without uneven drying between the windward and leeward sides of the mold shell during the dehumidification when using a blower and difficulties in dehumidification when using hygroscopic materials, the present invention, to a certain extent, realizes the improvement in quality and rapid draying of the mold shell, thereby enhancing productivity, reducing costs, saving energy and protecting the environment.

Corresponding to the above-mentioned rapid drying method for mold shell, the present invention also provides a rapid drying device for mold shell, as shown in Figure 2, which comprises:
a sealed chamber 1, which is used for accommodating the mold shell to be dried, and comprises a chamber body 11 which is equipped with a sealing door 12 and an air inlet (not indicated in the figure);
a heating device 3, which is used for controlling the mold shell under constant temperature;
a vacuum device 4, which is connected with the sealed chamber 1 for vacuuming the sealed chamber 1; and
a cooling and condensing device 2, which is for cooling part of gas in the sealed chamber 1, so as to condense the moisture in the sealed chamber 1.

The device as described in the present invention shall be used with the aforesaid rapid drying method for mold shell. First, place the mold shell to be dried into a sealed chamber 1; then, control the mold shell in constant temperature with the heating device 3, vacuum the sealed chamber 1 with the vacuum device 4 and cool part of gas in the sealed chamber with the cooling and condensing device 2 in predetermined time to condense the moisture in the sealed chamber 1; subsequently, inject gas into the sealed chamber 1 to make it return to normal atmosphere pressure; and finally, determine whether the mold shell is dried, if so, end the process; and if otherwise, repeat the process of vacuuming, cooling, condensing and gas injecting.

In the present invention, the sealed chamber is dehumidified through condensation process in vacuum to make it dried gradually. As there are differences in humidity and atmosphere pressure between inside and outside due to large humidity in the mold shell, the moisture in the mold shell will defuse continuously. In vacuum, the diffusion of moisture is speeded up, greatly improving the drying speed of the mold shell, and there is no difference in drying speed in vacuum due to the consistent humidity, atmosphere pressure and moisture diffusion. In addition, the present invention cools part of gas in the sealed chamber to condense the moisture in the sealed chamber, which reduces the humidity of the sealed chamber, and makes the moisture of the mold shell defuse outwards continuously to gradually dry the mold shell. In the present invention, the constant temperature keeps the volume of the mold shell unchanged; injecting gas into the sealed chamber to make it back to normal atmosphere pressure could avoid partly excessive drying of the mold shell. The present invention is able to ensure the quality of a mold shell and realize the rapid drying of the mold shell simultaneously even if the mold shell has a complex structure.

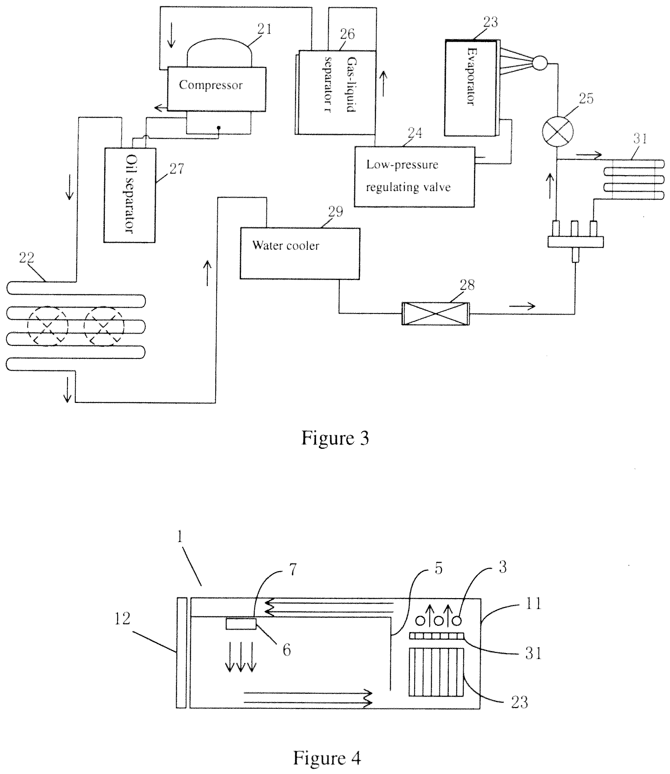

In the present invention, the cooling and condensing device 2 preferably adopts the following proposal:
As shown in Figure 3, the cooling and condensing device 2 comprises a compressor 21, a condenser 22, an evaporator 23, a low-pressure regulating valve 24 and an expansion valve 25. The compressor 21, the condenser 22, the low-pressure regulating valve 24 and the expansion valve 25 are all arranged outside the sealed chamber 1, and the evaporator 23 is arranged inside the sealed chamber 1, wherein,
the outlet of the compressor 21 is connected with the inlet of the condenser 22;
the outlet of the condenser 22 is connected with the inlet of the evaporator 23 via the expansion valve 25; and
the outlet of the evaporator 23 is connected with the inlet of the compressor 21 via the low-pressure regulating valve 24.

When in use, the compressor 21 first delivers the compressed gaseous cold medium to the condenser 22 under high pressure, and the condenser 22 cools down the gaseous cold medium into liquid and delivers the high-pressure liquid cold medium to the evaporator 23 via the expansion valve 25; the cold medium in the evaporator 23 absorbs the heat in the sealed chamber to condense the moisture inside, and, at the same time, it changes into low-pressure gaseous state from high-pressure liquid state, and then flows back to the compressor 21 via the low-pressure regulating valve 24, to state the next circulation.

In the aforesaid embodiment, after flowing out of the evaporator 23, the cold medium may be both in liquid and gas, therefore, for protecting the compressor 21 against damage, a gas-liquid separator 26 may be arranged between the compressor 21 and the low-pressure adjusting valve 24 for separating the liquid from the cold medium in order to make the gaseous cold medium flows back to the compressor 21 for the next circulation. The separated liquid cold medium can be delivered again to the evaporator 23 for use.

At the same time, oily substances for dissolving the cold medium may exist in the circulating pipe of the cooling and condensing device 2. For recycling the oily substances, an oil separator 27 may be arranged between the compressor 21 and the condenser 22, with its oil outlet connected to the compressor 21. In addition, for filtering the impurities in the cold medium and improving the cooling and condensing efficiency, a drying filter 28 for filtering the cold medium may also be connected between the condenser 22 and the expansion valve 25.

In order to further improve the cooling effects of the gaseous cold medium, a water cooler 29 for secondary cooling of the cold medium may be arranged between the condenser 22 and the drying filter 28, to improve the cooling and condensing effects of the whole cooling and condensing device 2.

In the process of controlling the mold shell under thermostatic condition, in order to improve the utilization of heat and save energy, a high-pressure heat recovery tube of compressor 31 is also arranged in the sealed chamber 1, wherein,
the outlet of the drying filter 28 is also connected with one end of the high-pressure heat recovery tube of compressor 31; and
the other end of the high-pressure heat recovery tube of compressor 31 is connected with the inlet of the expansion valve 25.

In this way, part of heat emitted by the compressor's high-pressure cold medium may be recycled, thus saving the energy.

As shown in Figure 2, the heating device 3 in the present invention is used for controlling the mold shell under thermostatic condition, which may adopt various heating methods, such as infrared heating, and various layouts, such as being arranged at the exterior surface of the sealed chamber 1. However, in consideration of the heating speed and the convenience of temperature control, the heating device 3 is preferably arranged inside the sealed chamber 1, which is preferably an electric heating tube.

In the present invention, when drying the mold shell, on one hand, it is required to control the mold shell under thermostatic condition (needing to be heated); and on the other hand, it is required to cool part of gas in the sealed chamber. Therefore, to make sure of no mutual interference, and improve the drying efficiency of the mold shell, in the embodiment as shown in Figure 4 of the present invention, the sealed chamber 1 is also arranged with a vertical spacer plate 5 and a fan 6 which form an air circulation loop in the sealed chamber 1, wherein,
one side of the vertical spacer plate 5 (the left side in Figure 4) is used for accommodating the mold shell, and the fan 6 is arranged above the side of the vertical spacer plate 5; and
the other side of the vertical spacer plate 5 (the right side in Figure 4) is for accommodating the evaporator 23.

In this way, driven by the fan 6, the air will carry the moisture in the mold shell to the evaporator 23, and then flow back to the fan 6 for the next circulation after the moisture is condensed by the evaporator 23. In order to further improve the air circulation efficiency, a transverse spacer plate 7 may be arranged above the vertical spacer plate 5 to form a L-shape structure with the vertical spacer plate 5, and the fan may be fixed on the transverse spacer plate 7, which contributes to further driving the flow direction of air and improving the air circulating efficiency. In addition, as shown in Figure 4, in order to control the mold shell under thermostatic condition, the heating device 3 (such as electric heating tube) and the high-pressure heat recovery tube of compressor 31 may be arranged at the same side with the evaporator 23 (above the evaporator 23).

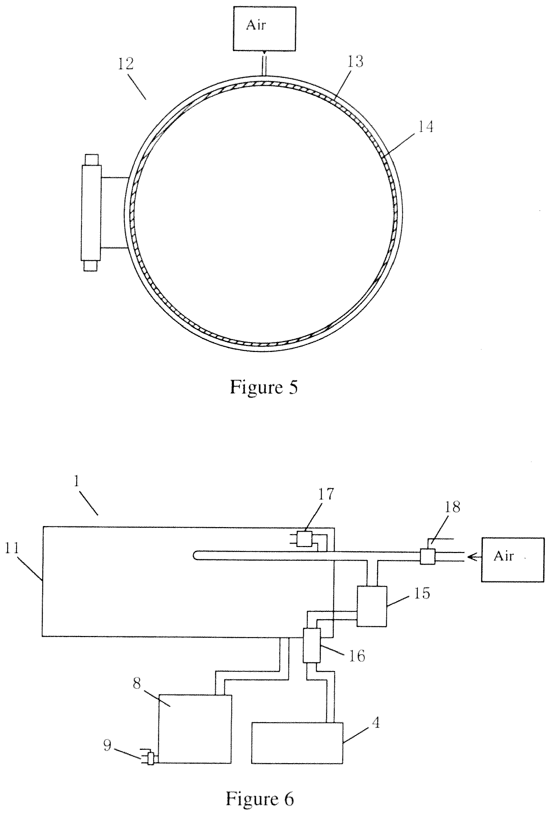

In the present invention, as the moisture in the sealed chamber 1 is condensed, the water from condensation will gather at the bottom of the sealed chamber 1. For the convenience of water drainage, as shown in Figure 6, a vacuum water tank 8 is arranged on the bottom of the chamber body 11, and drain outlets 9 are arranged on the bottom of the vacuum water tank 8. In this way, when the mold shell is dried, water generated in drying process may be conveniently drained outwards via the vacuum water tank 8.

In the present invention, the sealing method of the sealing door is also slightly different from that in the previous art. As shown in Figure 5, a sealing ring groove 13 is arranged around the sealing door 12 and an inflatable sealing ring14 is arranged in the sealing ring groove 13. When in use, after closing the sealing door 12, fill the high-pressure gas into the inflatable sealing ring 14 to blow it up for sealing; when completing the drying, release the gas in the sealing ring 14. The sealing ring in the prior art is generally a gasket, which will have friction with the chamber body, thus influencing the service life of the sealing ring, while, the inflatable sealing ring adopted in the present invention is able to reduce the friction between the sealing ring and the chamber body, thus greatly lengthening the service life of the sealing ring.

The vacuum device 4 in the present invention is used for vacuuming the sealed chamber 1, which may be a vacuum pump commonly used in the prior art. In order to prevent impurities in the air from influencing the service life of the vacuum device 4 after entering it, as shown in Figure 6, a first filter screen 15 and a second filter screen 16 are arranged in proper order between the vacuum device 4 and the chamber body 11 for thoroughly filtering the impurities in the air.

In addition, in the process of drying the mold shell and after completing the drying, it is required to inject gas into the sealed chamber 1 in vacuum to make it back to normal atmosphere pressure. Therefore, the air inlet of the chamber body 11 is also arranged with an external pressure equalizing solenoid valve 17 and/or an external pressure equalizing manual ball valve 18, both of which are able to make the external air return to the sealed chamber 1. In case of failure of the external pressure equalizing solenoid valve 17, the present invention may realize manual adjustment by using of the external pressure equalizing manual ball valve 18, so that the atmosphere pressure within the sealed chamber 1 could equal the external environment.

## Claims

1. A rapid drying method for mold shell, the mold shell comprising a surface layer, a transition layer, a supporting layer, and a sealing layer, the method including the following steps:
a. putting a mold shell to be dried in a sealed chamber (1);
b. vacuuming the sealed chamber (1) under the premise condition of controlling the mold shell in a constant temperature state, and cooling the gas in the sealed chamber (1) in a predetermined time period to condensate the moisture in the sealed chamber (1);
**characterized by** including the following further steps:
c. vacuum injecting gas to the sealed vacuum chamber (1) to make the chamber return to normal atmosphere pressure;
d. determining whether the mold shell is dry, if result is YES, then end, otherwise back to step b, wherein,
when drying the surface layer of the mold shell, the vacuum degree of the sealed chamber in step b is 86,6593∼73,3271 kPa (650∼550 mmHg),
when the transition layer of the mold shell is dried, the vacuum degree of the sealed chamber in step b is 70,66066∼57,32846 kPa (530∼430 mmHg),
when the supporting layer of the mold shell is dried, the vacuum degree of the sealed chamber in step b is 57,32846∼43,99626 kPa (430∼330 mmHg), and
when the sealing layer of the mold shell is dried, the vacuum degree of the sealed chamber in step b is 57,32846∼43,99626 kPa (430∼330 mmHg).

2. A rapidly drying device for mold shell, comprising the following parts:
a sealed chamber (1), which is used for holding the mold shell to be dried, and comprises a chamber body (11) equipped with a sealing door (12) and an air inlet;
a heating device (3), which is used for controlling the mold shell under constant temperature;
a vacuum device (4), which is connected with the sealed chamber (1) for vacuuming the sealed chamber (1); and
a cooling and condensing device (2), which is for cooling part of gas in the sealed chamber (1) to condense the moisture in the sealed chamber (1),
**characterized by** further comprising
means configured to carry out the method according to one claim 1.

3. The device as described in Claim 2, **characterized in that**, the cooling and condensing device (2) comprises a compressor (21), a condenser (22), an evaporator (23), a low-pressure regulating valve (24) and an expansion valve (25), wherein the compressor (21), the condenser (22), the low-pressure regulating valve (24) and the expansion valve (25) are all arranged outside the sealed chamber (1), while the evaporator (23) inside, wherein,
the outlet of the compressor (21) is connected with the inlet of the condenser (22);
the outlet of the condenser (22) is connected with the inlet of the evaporator (23) via the expansion valve (25); and
the outlet of the evaporator (23) is connected with the inlet of the compressor (21) via the low-pressure regulating valve (24).

4. The device as described in Claim 3, **characterized in that**, a gas-liquid separator (26) is arranged between the compressor (21) and the low-pressure regulating valve (24).

5. The device as described in Claim 4, **characterized in that**, an oil separator (27) is arranged between the compressor (21) and the condenser (22), wherein, an oil outlet of the oil separator (27) is connected to the compressor (21).

6. The device as described in Claim 5, **characterized in that**, a drying filter (28) is arranged between the condenser (22) and the expansion valve (25).

7. The device as described in Claim 6, **characterized in that**, a water cooler (29) is arranged between the condenser (22) and the drying filter (28).

8. The device as described in Claim 7, **characterized in that**, a high-pressure heat recovery tube of compressor (31) is also arranged inside the sealed chamber (1), wherein,
the outlet of the drying filter (28) is also connected with one end of the high-pressure heat recovery tube of compressor (31); and
The other end of the high-pressure heat recovery tube of compressor (31) is connected with the inlet of the expansion valve (25).

9. The device as described in Claim 2, **characterized in that**, the heating device (3), an electric heating tube, is arranged in the sealed chamber (1).

10. The device as described in any one of Claims 3 to 9, **characterized in that**, the sealed chamber (1) is also arranged with a vertical spacer plate (5) and a fan (6) to form an air circulation loop in the sealed chamber (1), wherein,
one side of the vertical spacer plate (5) is used for accommodating the mold shell, and the fan (6) is arranged above the side of the vertical spacer plate (5); and
the other side of the vertical spacer plate (5) is for accommodating the evaporator (23).

11. The device as described in Claim 2, **characterized in that**, a vacuum water tank (8) is arranged on the bottom of the chamber body (11), and drain outlets (9) are arranged on the bottom of the vacuum water tank (8).

12. The device as described in Claim 2, **characterized in that**, a sealing ring groove (13) is arranged around the sealing door (12) and an inflatable sealing ring (14) is arranged in the sealing ring groove (13).

13. The device as described in Claim 2, **characterized in that**, a first filter screen (15) and a second filter screen (16) are arranged in proper order between the vacuum device (4) and the chamber body (11).

14. The device as described in Claim 2, **characterized in that**, the air inlet of the chamber body (11) is arranged with an external pressure equalizing solenoid valve (17) and/or an external pressure equalizing manual ball valve (18).

## Patentansprüche

1. Schnelltrocknungsverfahren für eine Formschale, wobei die Formschale eine Oberflächenschicht, eine Übergangsschicht, eine Trägerschicht und eine Versiegelungsschicht aufweist, wobei das Verfahren die folgenden Schritte umfasst:
a. Einbringen einer zu trocknenden Formschale in eine abgedichtete Kammer (1),
b. Vakuumierung der abgedichteten Kammer (1) unter der Voraussetzungsbedingung des Kontrollierens der Formschale in einem Zustand konstanter Temperatur und Kühlen des Gases in der abgedichteten Kammer (1) in einer vorbestimmten Zeitperiode, um die Feuchtigkeit in der abgedichteten Kammer (1) zu kondensieren,
**gekennzeichnet durch** Umfassen der folgenden weiteren Schritte:
c. Vakuumeinspritzen von Gas in die abgedichtete Vakuumkammer (1), um die Kammer zu normalem Atmosphärendruck zurückkehren zu lassen,
d. Bestimmen, ob die Formschale trocken ist, wenn das Ergebnis JA ist, dann Beenden, andernfalls zurück zu Schritt b, wobei,
wenn die Oberflächenschicht der Formschale getrocknet wird, beträgt der Vakuumgrad der abgedichteten Kammer in Schritt b 86.6593∼73.3271 kPa (650∼550 mmHg),
wenn die Übergangsschicht der Formschale getrocknet wird, beträgt der Vakuumgrad der abgedichteten Kammer in Schritt b 70.66066∼57.32846 kPa (530∼430 mmHg),
wenn die Trägerschicht der Formschale getrocknet wird, beträgt der Vakuumgrad der abgedichteten Kammer in Schritt b 57.32846∼43.99626 kPa (430∼330 mmHg), und
wenn die Versiegelungsschicht der Formschale getrocknet wird, beträgt der Vakuumgrad der abgedichteten Kammer in Schritt b 57.32846∼43.99626 kPa (430∼330 mmHg).

2. Schnell trocknende Vorrichtung für eine Formschale, umfassend die folgenden Teile:
eine abgedichtete Kammer (1), die zum Aufnehmen der zu trocknenden Formschale verwendet wird und einen Kammerkörper (11) aufweist, der mit einer Dichtungstür (12) und einem Lufteinlass versehen ist,
eine Heizvorrichtung (3), die zum Kontrollieren der Formschale bei konstanter Temperatur verwendet wird,
eine Vakuumvorrichtung (4), die mit der abgedichteten Kammer (1) zur Vakuumierung der abgedichteten Kammer (1) verbunden ist, und
eine Kühl- und Kondensiervorrichtung (2), die zum Kühlen eines Teils des Gases in der abgedichteten Kammer (1) dient, um die Feuchtigkeit in der abgedichteten Kammer (1) zu kondensieren,
**dadurch gekennzeichnet, dass** sie ferner umfasst
Mittel, die dazu konfiguriert sind, das Verfahren nach Anspruch 1 auszuführen.

3. Vorrichtung nach Anspruch 2, **dadurch gekennzeichnet, dass** die Kühl- und Kondensiervorrichtung (2) einen Kompressor (21), einen Kondensierer (22), einen Verdampfer (23), ein Niederdruckregelventil (24) und ein Expansionsventil (25) aufweist, wobei der Kompressor (21), der Kondensierer (22), das Niederdruckregelventil (24) und das Expansionsventil (25) alle außerhalb der abgedichteten Kammer (1) angeordnet sind, während der Verdampfer (23) innerhalb ist, wobei
der Auslass des Kompressors (21) mit dem Einlass des Kondensierers (22) verbunden ist,
der Auslass des Kondensierers (22) über das Expansionsventil (25) mit dem Einlass des Verdampfers (23) verbunden ist und
der Auslass des Verdampfers (23) über das Niederdruckregelventil (24) mit dem Einlass des Kompressors (21) verbunden ist.

4. Vorrichtung nach Anspruch 3, **dadurch gekennzeichnet, dass** zwischen dem Kompressor (21) und dem Niederdruckregelventil (24) ein Gas-Flüssigkeitsabscheider (26) angeordnet ist.

5. Vorrichtung nach Anspruch 4, **dadurch gekennzeichnet, dass** zwischen dem Verdichter (21) und dem Kondensierer (22) ein Ölabscheider (27) angeordnet ist, wobei ein Ölauslass des Ölabscheiders (27) mit dem Kompressor (21) verbunden ist.

6. Vorrichtung nach Anspruch 5, **dadurch gekennzeichnet, dass** zwischen dem Kondensierer (22) und dem Expansionsventil (25) ein Trockenfilter (28) angeordnet ist.

7. Vorrichtung nach Anspruch 6, **dadurch gekennzeichnet, dass** zwischen dem Kondensierer (22) und dem Trockenfilter (28) ein Wasserkühler (29) angeordnet ist.

8. Vorrichtung nach Anspruch 7, **dadurch gekennzeichnet, dass** innerhalb der abgedichteten Kammer (1) ebenfalls ein Hochdruck-Wärmerückgewinnungsrohr des Kompressors (31) angeordnet ist, wobei
der Auslass des Trockenfilters (28) ebenfalls mit einem Ende des Hochdruck-Wärmerückgewinnungsrohrs des Kompressors (31) verbunden ist und
das andere Ende des Hochdruck-Wärmerückgewinnungsrohrs des Kompressors (31) mit dem Einlass des Expansionsventils (25) verbunden ist.

9. Vorrichtung nach Anspruch 2, **dadurch gekennzeichnet, dass** die Heizvorrichtung (3), ein elektrisches Heizrohr, in der abgedichteten Kammer (1) angeordnet ist.

10. Vorrichtung nach einem der Ansprüche 3 bis 9, **dadurch gekennzeichnet, dass** in der abgedichteten Kammer (1) ebenfalls eine vertikale Distanzplatte (5) und ein Ventilator (6) zur Bildung einer Luftzirkulationsschleife in der abgedichteten Kammer (1) angeordnet sind, wobei
eine Seite der vertikalen Distanzplatte (5) zur Aufnahme der Formschale verwendet wird und der Ventilator (6) oberhalb der Seite der vertikalen Distanzplatte (5) angeordnet ist und
die andere Seite der vertikalen Distanzplatte (5) zur Aufnahme des Verdampfers (23) dient.

11. Vorrichtung nach Anspruch 2, **dadurch gekennzeichnet, dass** am Boden des Kammerkörpers (11) ein Vakuumwassertank (8) angeordnet ist und am Boden des Vakuumwassertanks (8) Entleerungsauslässe (9) angeordnet sind.

12. Vorrichtung nach Anspruch 2, **dadurch gekennzeichnet, dass** rund um die Dichtungstür (12) eine Dichtungsringnut (13) angeordnet ist und in der Dichtungsringnut (13) ein aufblasbarer Dichtungsring (14) angeordnet ist.

13. Vorrichtung nach Anspruch 2, **dadurch gekennzeichnet, dass** ein erstes Filtersieb (15) und ein zweites Filtersieb (16) in der richtigen Reihenfolge zwischen der Vakuumvorrichtung (4) und dem Kammerkörper (11) angeordnet sind.

14. Vorrichtung nach Anspruch 2, **dadurch gekennzeichnet, dass** der Lufteinlass des Kammerkörpers (11) mit einem externen Druckausgleichs-Magnetventil (17) und / oder einem externen manuellen Druckausgleichs-Kugelventil (18) versehen ist.

## Revendications

1. Procédé de séchage rapide pour coquille de moule, la coquille de moule comprenant une couche de surface, une couche de transition, une couche de support et une couche d'étanchéité, le procédé comprenant les étapes suivantes :
a. placer une coquille de moule à sécher dans une chambre étanche (1) ;
b. mettre sous vide la chambre étanche (1) dans la condition hypothétique du contrôle de la coquille de moule dans un état de température constante, et du refroidissement du gaz dans la chambre étanche (1) pendant une période de temps prédéterminée pour condenser l'humidité dans la chambre étanche (1) ;
**caractérisé en ce qu'**il comprend les étapes supplémentaires suivantes :
c. injecter du gaz sous vide dans la chambre étanche sous vide (1) pour ramener la chambre à la pression atmosphérique normale ;
d. déterminer si la coquille de moule est sèche, si le résultat est OUI, alors arrêter, ou bien revenir à l'étape b, dans lequel :
lorsque du séchage de la couche de surface de la coquille de moule, le degré de vide de la chambre étanche à l'étape b est de 86,6593 ∼ 73,3271 kPa (650 ∼ 550 mmHg),
lorsque la couche de transition de la couche de moule est sèche, le degré de vide de la chambre étanche à l'étape b est de 70, 66066 ∼ 57,32846 kPa (530 ∼ 430 mmHg),
lorsque la couche de support de la coquille de moule est sèche, le degré de vide de la chambre étanche à l'étape b est de 57,32846 ∼ 43,99626 kPa (430 ∼ 330 mmHg), et
lorsque la couche d'étanchéité de la coquille de moule est sèche, le degré de vide de la chambre étanche à l'étape b est de 57,32846 ∼ 43,99626 kPa (430 ∼ 330 mmHg).

2. Dispositif de séchage rapide pour coquille de moule, comprenant les parties suivantes :
une chambre étanche (1) qui est utilisée pour maintenir la coquille de moule à sécher, et comprend un corps de chambre (11) équipé avec une porte d'étanchéité (12) et une entrée d'air ;
un dispositif de chauffage (3) qui est utilisé pour contrôler la coquille de moule à température constante ;
un dispositif de vide (4) qui est raccordé à la chambre étanche (1) pour mettre la chambre étanche (1) sous vide ; et
un dispositif de refroidissement et de condensation (2) qui est prévu pour refroidir une partie du gaz dans la chambre étanche (1) afin de condenser l'humidité dans la chambre étanche (1),
**caractérisé en ce qu'**il comprend en outre :
des moyens configurés pour réaliser le procédé selon la revendication 1.

3. Dispositif selon la revendication 2, **caractérisé en ce que** le dispositif de refroidissement et de condensation (2) comprend un compresseur (21), un condenseur (22), un évaporateur (23), une valve de régulation basse pression (24) et une valve d'expansion (25), dans lequel le compresseur (21), le condenseur (22), la valve de régulation basse pression (24) et la valve d'expansion (25) sont tous agencés à l'extérieur de la chambre étanche (1), alors que l'évaporateur (23) est à l'intérieur, dans lequel :
la sortie du compresseur (21) est raccordée à l'entrée du condenseur (22) ;
la sortie du condenseur (22) est raccordée à l'entrée de l'évaporateur (23) via la valve d'expansion (25) ; et
la sortie de l'évaporateur (23) est raccordée à l'entrée du compresseur (21) via la valve de régulation basse pression (24).

4. Dispositif selon la revendication 3, **caractérisé en ce qu'**un séparateur de gaz - liquide (26) est agencé entre le compresseur (21) et la valve de régulation basse pression (24).

5. Dispositif selon la revendication 4, **caractérisé en ce qu'**un séparateur d'huile (27) est agencé entre le compresseur (21) et le condenseur (22), dans lequel une sortie d'huile du séparateur d'huile (27) est raccordée au compresseur (21).

6. Dispositif selon la revendication 5, **caractérisé en ce qu'**un filtre de séchage (28) est agencé entre le condenseur (22) et la valve d'expansion (25).

7. Dispositif selon la revendication 6, **caractérisé en ce qu'**un refroidisseur d'eau (29) est agencé entre le condenseur (22) et le filtre de séchage (28).

8. Dispositif selon la revendication 7, **caractérisé en ce qu'**un tube de récupération de chaleur haute pression du compresseur (31) est également agencé à l'intérieur de la chambre étanche (1), dans lequel :
la sortie du filtre de séchage (28) est également raccordée à une extrémité du tube de récupération de chaleur haute pression du compresseur (31) ; et
l'autre extrémité du tube de récupération de chaleur haute pression du compresseur (31) est raccordée à l'entrée de la valve d'expansion (25).

9. Dispositif selon la revendication 2, **caractérisé en ce que** le dispositif de chauffage (3), un tube de chauffage électrique, est agencé dans la chambre étanche (1).

10. Dispositif selon l'une quelconque des revendications 3 à 9, **caractérisé en ce que** la chambre étanche (1) est également agencée avec une plaque d'espacement verticale (5) et un ventilateur (6) pour former une boucle de circulation d'air dans la chambre étanche (1), dans lequel :
un côté de la plaque d'espacement verticale (5) est utilisé pour loger la coquille de moule, et le ventilateur (6) est agencé au-dessus du côté de la plaque d'espacement verticale (5) ; et
l'autre côté de la plaque d'espacement verticale (5) est prévu pour loger l'évaporateur (23).

11. Dispositif selon la revendication 2, **caractérisé en ce qu'**un réservoir d'eau sous vide (8) est agencé au fond du corps de chambre (11), et des sorties de drain (9) sont agencées au fond du réservoir d'eau sous vide (8).

12. Dispositif selon la revendication 2, **caractérisé en ce qu'**une rainure annulaire d'étanchéité (13) est agencée autour de la porte d'étanchéité (12) et une bague d'étanchéité gonflable (14) est agencée dans la rainure annulaire d'étanchéité (13).

13. Dispositif selon la revendication 2, **caractérisé en ce qu'**un premier crible (15) et un second crible (16) sont agencés dans le bon ordre entre le dispositif de vide (4) et le corps de chambre (11).

14. Dispositif selon la revendication 2, **caractérisé en ce que** l'entrée d'air du corps de chambre (11) est agencée avec une électrovanne d'égalisation de pression externe (17) et/ou un clapet à bille manuel d'égalisation de pression externe (18).
